# EUROPEAN PATENT APPLICATION

(11) **EP 4 513 427 A1**
(43) Date of publication of application: **26.02.2025**
(21) Application number: 23790897.5
(22) Date of filing: 02.03.2023
(51) Int. Cl.: G06T 7/00, G06T 7/13, G06T 7/194, G06T 3/00, G01N 21/88, H01M 10/42

(54) **METHOD, APPARATUS AND SYSTEM FOR PERFORMING DEFECT DETECTION ON CATHODE PIECE OF COMPOSITE MATERIAL BELT**

(30) Priority: 18.04.2022 CN 202210405453
(71) Applicant: Contemporary Amperex Technology Co., Ltd., Ningde, Fujian 352100 (CN)
(72) Inventor: ZHAO, Baiquan, Ningde, Fujian 352100 (CN); NI, Dajun, Ningde, Fujian 352100 (CN); HU, Jun, Ningde, Fujian 352100 (CN); FENG, Shiping, Ningde, Fujian 352100 (CN); WU, Qian, Ningde, Fujian 352100 (CN); WANG, Jianlei, Ningde, Fujian 352100 (CN)
(74) Representative: Ran, Handong
(86) International application number: PCT/CN2023/079333
(87) International publication number: WO 2023/202234

(57) **Abstract**

Provided in the present application are a method, apparatus and system for performing defect detection on a cathode piece of a composite material belt, and an electronic device, a lamination machine, a computer-readable storage medium and a computer program product. The method comprises: acquiring consecutive images of a composite material belt; clipping at least one image fragment from the consecutive images of the composite material belt, wherein the image fragment comprises a cathode piece body area; and performing detection on the cathode piece body area. By means of the technical solutions in the embodiments of the present application, defect detection can be quickly and accurately performed on a cathode piece of a composite material belt, such that the production yield of a laminated cell assembly can be increased.

## Description

### CROSS-REFERENCE TO RELATED APPLICATIONS

This application refers to China Patent Application No.202210405453.7, filed on April 18, 2022 and entitled "METHOD, APPARATUS, AND SYSTEM FOR DEFECT DETECTION OF CATHODE ELECTRODE PLATE OF COMPOSITE MATERIAL STRIP", which is incorporated into this application by reference in its entirety.

### TECHNICAL FIELD

This application relates to the technical field of battery production inspection, and specifically, to a method, apparatus, and system for defect detection of a cathode electrode plate of a composite material strip, an electronic device, a lamination machine, a computer-readable storage medium, and a computer program product.

### BACKGROUND

In the related art, a rechargeable battery (a battery that can be used continuously by activating the active material through charging after the battery is discharged, also known as a secondary battery) includes a battery box and a plurality of battery cells that are combined in series and/or parallel inside the battery box. The battery cell is the smallest unit that provides energy source in the battery. A battery cell assembly is a key component in which electrochemical reactions take place in the battery cell, and its main structure includes an anode electrode plate, a cathode electrode plate, and a separator for separating the anode electrode plate from the cathode electrode plate.

According to the production process, battery cell assemblies can be classified into wound battery cell assemblies and laminated battery cell assemblies. The compounding process of the lamination material strip may cause damage to the battery cell assembly, so how the production yield of laminated battery cell assemblies is improved is a technical issue that needs to be solved urgently by persons skilled in the art.

### SUMMARY

This application is intended to resolve at least one of the technical issues in the related art. To this end, an objective of this application is to provide a method, apparatus, and system for defect detection of a cathode electrode plate of a composite material strip, an electronic device, a lamination machine, a computer-readable storage medium, and a computer program product.

According to an aspect of this application, a method for defect detection of a cathode electrode plate of a composite material strip is provided, where the method includes: obtaining a continuous image of the composite material strip; intercepting at least one image segment from the continuous image of the composite material strip, where the image segment includes a cathode electrode plate body region; and performing detection on the cathode electrode plate body region.

According to the solution of this embodiment of this application, detection can be performed for defects existing in a continuous cathode electrode plate of the composite material strip in the lamination process, which helps relevant personnel to adjust a relevant component in the lamination machine in a timely manner, thereby effectively controlling the outflow of battery cell assemblies with defects in the cathode electrode plate, increasing the yield of production, and reducing the waste of production materials.

In some embodiments, the image segment further includes a separator region surrounding the cathode electrode plate body region, a plurality of tab protruding regions, and a background region adjacent to the separator region, and the method further includes: extracting the cathode electrode plate body region from the image segment.

In some embodiments, the extracting the cathode electrode plate body region from the image segment includes: removing the background region from the image segment based on a maximum grayscale threshold of the background region to obtain an intermediate image; and removing the separator region and the plurality of tab protruding regions from the intermediate image based on a maximum grayscale threshold of the cathode electrode plate body region to obtain the cathode electrode plate body region. According to the solution of this embodiment, the extraction of the cathode electrode plate body region from the image segment can be realized.

In some embodiments, the performing detection on the cathode electrode plate body region includes: determining, based on the cathode electrode plate body region, a detection region corresponding to the cathode electrode plate body region.

In some embodiments, the determining a detection region corresponding to the cathode electrode plate body region includes: determining a minimum rectangular region circumscribed about edges of the cathode electrode plate body region, and taking the minimum rectangular region as the detection region corresponding to the cathode electrode plate body region. According to the solution of this embodiment, the detection region corresponding to the cathode electrode plate body region can be accurately determined.

In some embodiments, the determining a minimum rectangular region circumscribed about edges of the cathode electrode plate body region includes: extracting a first straight edge and a second straight edge of the cathode electrode plate body region that have the same extension direction as the composite material strip and a third straight edge and a fourth straight edge that are orthogonal to the extension direction of the composite material strip; and determining the minimum rectangular region circumscribed about the edges of the cathode electrode plate body region based on intersections of the first straight edge, the second straight edge, the third straight edge, and the fourth straight edge. According to the solution of this embodiment, the detection region corresponding to the cathode electrode plate body region can be quickly and accurately determined.

In some embodiments, the performing detection on the cathode electrode plate body region includes: determining whether the detection region includes a suspected defect region.

In some embodiments, the determining whether the detection region includes a suspected defect region includes: in response to determining that the detection region includes an abnormal pixel set, obtaining at least one independently connected abnormal pixel subset based on the abnormal pixel set, where a grayscale of each pixel in the abnormal pixel set is greater than the maximum grayscale threshold of the cathode electrode plate body region or less than a minimum grayscale threshold of the cathode electrode plate body region; and for each such abnormal pixel subset, in response to determining that an area of the abnormal pixel subset is greater than an area threshold, determining that the detection region includes the suspected defect region. According to the solution of this embodiment, the suspected defect region can be identified.

In some embodiments, the performing detection on the cathode electrode plate body region includes: determining a suspected defect type corresponding to the suspected defect region based on geometrical characteristic information and/or grayscale of the suspected defect region, where the suspected defect type includes suspected damage or suspected wrinkle. In these embodiments, the suspected defect type of the suspected defect region such as suspected damage or suspected wrinkle can be further determined.

In some embodiments, the performing detection on the cathode electrode plate body region includes: determining a confidence coefficient of the suspected defect region based on image information of the suspected defect region and image information of at least one electrode plate defect sample in an electrode plate defect sample library; and in response to determining that the confidence coefficient is greater than a confidence threshold, determining that the suspected defect region is a defect region. According to the solution of this embodiment, whether the suspected defect region is a defect region can be accurately determined.

In some embodiments, the obtaining a continuous image of the composite material strip includes: obtaining a continuous image shot by a line scan camera for each side surface of the composite material strip. In this way, the defect detection can be performed on the cathode electrode plates on two sides of the composite material strip.

In some embodiments, the method further includes: outputting a detection result, where the detection result includes at least one of the following: positioning information of the defect region in the image segment, geometrical characteristic information of the defect region, positioning information of the image segment corresponding to the composite material strip, alarm information indicating that the cathode electrode plate is defective, and a defect type, where the defect type includes damage or wrinkle. The foregoing content of the detection result is helpful for the relevant personnel to know about the specific situation of the defects in the cathode electrode plate, so that the relevant component in the lamination machine can be adjusted in a timely manner.

According to an aspect of this application, an apparatus for defect detection of a cathode electrode plate of a composite material strip is provided, where the apparatus includes: an obtaining unit, configured to obtain a continuous image of the composite material strip; an extraction unit, configured to intercept at least one image segment from the continuous image of the composite material strip, where the image segment includes a cathode electrode plate body region; and a detection unit, configured to perform detection on the cathode electrode plate body region. The solution of this embodiment can achieve the same technical effect as the above method.

According to an aspect of this application, an electronic device is provided, where the electronic device includes at least one processor and a memory communicatively connected to the at least one processor, where the memory stores instructions executable by the at least one processor, and when the instructions are executed by the at least one processor, the at least one processor is caused to execute the method according to the foregoing aspect.

According to an aspect of this application, a system for defect detection of a cathode electrode plate of a composite material strip is provided, including: a first image acquisition unit, configured to acquire a continuous image of one side surface of the composite material strip; a second image acquisition unit, configured to acquire a continuous image of another side surface of the composite material strip; and the electronic device according to the foregoing aspect, connected to the first image acquisition unit and the second image acquisition unit separately. According to the solution of this embodiment, detection can be performed for defects existing in a continuous cathode electrode plate of the composite material strip in the lamination process, which helps relevant personnel to adjust a relevant component in the lamination machine in a timely manner, thereby effectively controlling the outflow of defective battery cell assemblies, increasing the yield of production, and reducing the waste of production materials.

In some embodiments, the first image acquisition unit is a first line scan camera and the second image acquisition unit is a second line scan camera; and the system further includes a first line light source for illuminating an acquisition region of the first line scan camera and a second line light source for illuminating an acquisition region of the second line scan camera. The line scan camera is more suitable for situations where there is relative motion between a measured object and the camera and can obtain higher resolution and larger field of view. The line light source is used to provide illumination for the line scan camera.

In some embodiments, the system according to the foregoing aspect further includes: a first support roller and a first encoder connected to the first support roller, where the first support roller abuts against one side surface of the composite material strip, and the first encoder is configured to send a pulse signal to the first line scan camera to trigger the first line scan camera to acquire images line by line; and a second support roller and a second encoder connected to the second support roller, where the second support roller abuts against another side surface of the composite material strip, and the second encoder is configured to send a pulse signal to the second line scan camera to trigger the second line scan camera to acquire images line by line. The first support roller and the second support roller can tighten the composite material strip, which is conducive to accurately acquiring images of the composite material strip, thereby improving the accuracy of defect detection.

In some embodiments, the acquisition region of the first line scan camera is arranged at a tangent position of the composite material strip and the first support roller; and the acquisition region of the second line scan camera is arranged at a tangent position of the composite material strip and the second support roller. This solution facilitates the installation and alignment of the line scan camera and the line light source, thereby facilitating the accurate installation of the line scan camera and the line light source, and further helping to improve the accuracy of defect detection.

According to an aspect of this application, a lamination machine is provided, including the system according to the foregoing aspect. In the lamination process of the lamination machine, detection can be performed for defects existing in a continuous cathode electrode plate of the composite material strip, which helps relevant personnel to adjust a relevant component in the lamination machine in a timely manner, thereby increasing the yield of production.

According to an aspect of this application, a computer-readable storage medium storing computer instructions is provided, where the computer instructions are used to cause a computer to execute the method according to the foregoing aspect.

According to an aspect of this application, a computer program product is provided, including a computer program, where when the computer program is executed by a processor, the method according to the foregoing aspect is implemented.

According to the foregoing embodiments of this application, detection can be performed for defects existing in a continuous cathode electrode plate of the composite material strip in the lamination process, which helps relevant personnel to adjust a relevant component in the lamination machine in a timely manner, thereby effectively controlling the outflow of battery cell assemblies with defects in the electrode plate, increasing the yield of production, and reducing the waste of production materials.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in a plurality of accompanying drawings denote the same or similar components or elements. The accompanying drawings are not necessarily drawn to scale. It should be understood that these accompanying drawings merely describe some embodiments disclosed in this application, and should not be construed as a limitation on the scope of this application. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a disassembled structure of a laminated battery cell assembly;
FIG. 2 is a structural block diagram of a lamination machine in the related art;
FIG. 3 is a schematic structural diagram of a system for defect detection of a cathode electrode plate of a composite material strip according to some embodiments of this application;
FIG. 4 is a schematic diagram of an image segment according to some embodiments of this application;
FIG. 5 is a schematic flowchart of a method for defect detection of a cathode electrode plate of a composite material strip according to some embodiments of this application;
FIG. 6 is a schematic flowchart of extracting a cathode electrode plate body region from an image segment according to some embodiments of this application;
FIG. 7 is a schematic diagram of a suspected defect region in a cathode electrode plate body region according to some embodiments of this application;
FIG. 8 is a schematic flowchart of a method for defect detection of a cathode electrode plate of a composite material strip according to some embodiments of this application;
FIG. 9 is a structural block diagram of an apparatus for defect detection of a cathode electrode plate of a composite material strip according to some embodiments of this application; and
FIG. 10 is a structural block diagram of a lamination machine according to some embodiments of this application.

### Description of reference signs:

100: laminated battery cell assembly; 110: anode electrode plate; 111: anode electrode plate body; 112: anode electrode tab;
120: cathode electrode plate; 121: cathode electrode plate body; 122: cathode electrode tab; 130: separator; 200: lamination machine;
210: first cutting mechanism; 220: first compounding mechanism; 230: second cutting mechanism; 240: second compounding mechanism;
250: lamination mechanism; 400: system; 410: first image acquisition unit; 420: second image acquisition unit;
430: first line light source; 440: second line light source; 450: first support roller; 460: second support roller;
470: first encoder; 480: second encoder; 490: electronic device; 550: continuous image; 500: image segment;
510: separator region; 520: cathode electrode plate body region; 521: defect region; 521a: damaged region; 521b: wrinkled region;
530: tab protruding region; 540: background region; 5100: tab-separator overlapping region; 710: intermediate image; 720: detection region;
520a: first straight edge; 520b: second straight edge; 520c: third straight edge; 520d: fourth straight edge;
522: abnormal pixel subset; 523: suspected defect region; 1001: obtaining unit; 1002: extraction unit; 1003: detection unit; 1100: lamination machine; 1110: first cutting mechanism; 1120: first compounding mechanism; 1130: second cutting mechanism; 1140: second compounding mechanism; 1150: lamination mechanism; and 300: composite material strip.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mounting", "connection", "joining", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

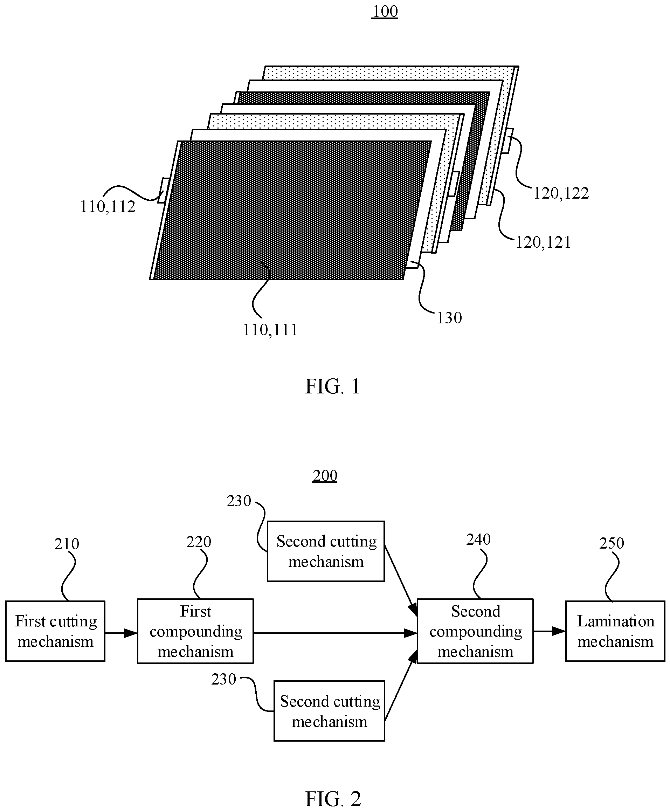

As shown in FIG. 1, the laminated battery cell assembly 100 includes a plurality of anode electrode plates 110 and a plurality of cathode electrode plates 120 alternately arranged, and a separator 130 arranged between any adjacent anode electrode plate 110 and cathode electrode plate 120. The anode electrode plate 110 includes an anode electrode plate body 111 with an active material and an anode electrode tab112 with no active material layer, and the cathode electrode plate 120 includes a cathode electrode plate body 121 with an active material and a cathode electrode tab 122 with no active material layer. Inside a lithium-ion battery cell (hereinafter referred to as a battery cell), the laminated battery cell assembly 100 is soaked in an electrolyte, and lithium ions move between the anode and cathode of the battery cell using the electrolyte as the medium, which enables the battery cell to be charged and discharged. The function of the separator 130 is to allow lithium ions to pass through freely, while preventing electrons from passing through, thereby preventing a short circuit between the anode and cathode of the battery cell caused by the electrolyte.

The lamination process of laminated battery cell assemblies is mainly carried out in a lamination machine. As shown in FIG. 2, in the related art, the lamination machine 200 includes a first cutting mechanism 210, a first compounding mechanism 220, two second cutting mechanisms 230, a second compounding mechanism 240, and a lamination mechanism 250 arranged in sequence. The first cutting mechanism 210 is configured to cut a first electrode plate material segment from a first electrode plate material strip. The first compounding mechanism 220 is configured to compound a first separator material strip and a second separator material strip with two side surfaces of the first electrode plate material segment to form a primary composite material strip. The two second cutting mechanisms 230 are configured to cut a second electrode plate and a third electrode plate respectively from a second electrode plate material strip and a third electrode plate material strip in a one-to-one correspondence, where the second electrode plate material strip has the same polarity as the third electrode plate material strip (they can use the same material and structure) and opposite polarity as the first electrode plate material strip. The second compounding mechanism 240 is configured to alternately compound the second electrode plate and the third electrode plate with two side surfaces of the primary composite material strip to form a secondary composite material strip (hereinafter referred to as composite material strip for short). The lamination mechanism 250 is configured to laminate and cut the composite material strip to form a laminated assembly.

The lamination mechanism 250 of the lamination machine 200 folds the composite material strip in a zigzag manner and cuts it, so as to obtain a laminated assembly. Subsequently, the subsequent production processes of battery cell assemblies, such as hot pressing and tab welding, can be carried out.

In the related art, the quality inspection of the laminated battery cell assembly is arranged after the lamination process. Generally, an X-ray imager is used to scan around the laminated battery cell assembly, and based on a scan image, whether the electrode plates of the laminated battery cell assembly are damaged, wrinkled, or deformed is determined. The working principle of the X-ray imager is as follows: When X-rays irradiate a sample, their transmission intensity is not only related to the energy of the X-rays, but also related to the material density and thickness of the sample material. A smaller material density and a thinner thickness make it easier for the X-rays to penetrate. After the X-rays irradiate the sample, the transmission intensity of the X-rays is imaged by an image receiving and converting apparatus through brightness difference in grayscale contrast, thereby forming a scan image of the X-rays.

The applicant of this application has noticed that when the composite material strip is transported in the lamination machine, the electrode plate may be damaged, for example, damaged or wrinkled, due to presence of foreign matter on a driving roller, rolling compaction, improper tension, or other mechanical reasons. Although the detection scheme for electrode plates of the laminated battery cell assembly in the related art can find some problems, the imaging efficiency of X-ray scanning is low, so when it is found that the electrode plates have damage defects (mainly due to external factors, referred to as defects in this specification), the lamination machine may have been mass-produced, which leads to a low production yield and a large waste of production materials. How the production yield of laminated battery cell assemblies is improved is a technical issue that needs to be solved urgently by persons skilled in the art.

In view of the above technical issues found, the applicant has provided a method, apparatus, and system for defect detection of a cathode electrode plate of a composite material strip, an electronic device, a lamination machine, a computer-readable storage medium, and a computer program product through in-depth research, which can quickly and accurately detect defects in the cathode electrode plate of the composite material strip (referred to as a cathode electrode plate visible on the appearance of the composite material strip in this application), thereby improving the production yield of the laminated battery cell assembly.

The solution of the embodiments of this application utilizes computer vision technology. A continuous image of the composite material strip is obtained first; then at least one image segment is intercepted from the continuous image of the composite material strip; and then detection is performed on a cathode electrode plate body region in the image segment. According to the solution of the embodiments of this application, detection can be performed for defects existing in a continuous cathode electrode plate of the composite material strip in the lamination process, which helps relevant personnel to adjust a relevant component in the lamination machine in a timely manner. Compared with related art, this application can effectively control the outflow of battery cell assemblies with defects in the electrode plate and reduce the waste of production materials.

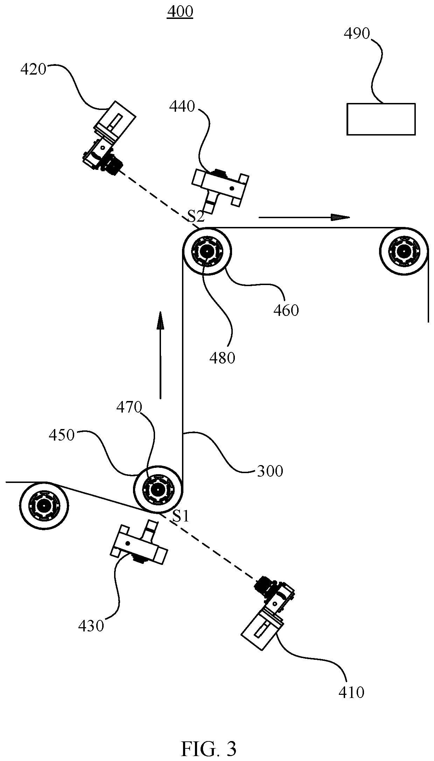

As shown in FIG. 3, a main hardware configuration of a system 400 for defect detection of a cathode electrode plate of a composite material strip according to some embodiments of this application includes a first image acquisition unit 410, a second image acquisition unit 420, and an electronic device 490. The first image acquisition unit 410 is configured to acquire a continuous image of one side surface of a composite material strip 300, and the second image acquisition unit 420 is configured to acquire a continuous image of another side surface of the composite material strip 300. The electronic device 490 is connected to the first image acquisition unit 410 and the second image acquisition unit 420 separately, and is configured to perform defect detection on exposed cathode electrode plates on two side surfaces of the composite material strip 300 based on the continuous images acquired by the first image acquisition unit 410 and the second image acquisition unit 420, and output detection results.

The electronic device 490 may be connected to the first image acquisition unit 410 and the second image acquisition unit 420 in a wired or wireless manner. Main image acquisition targets of the first image acquisition unit 410 and the second image acquisition unit 420 are the composite material strip 300, and therefore the first image acquisition unit 410 and the second image acquisition unit 420 can be arranged at appropriate positions between the second compounding mechanism and lamination mechanism of the lamination machine.

The specific types of the first image acquisition unit 410 and the second image acquisition unit 420 are not limited, and a conventional area array industrial camera or a line scan camera may be used. In some embodiments of this application, the first image acquisition unit 410 is a first line scan camera and the second image acquisition unit 420 is a second line scan camera.

The line scan camera, also known as a single-scanline camera, is used in situations where there is relative motion between a measured object and the camera, and can obtain higher resolution and larger field of view. An infinitely extended continuous image can be obtained theoretically by acquiring image information of a measured object in motion line by line. Through the intelligent processing of software, an image segment can be intercepted from the continuous image, and the electronic device can process the image segment in real time or cache it for later processing.

A first line light source 430 and a second line light source 440 are configured to provide illumination for their corresponding line scan cameras. For example, relative installation positions of the first line light source 430 and the first line scan camera should satisfy that: A narrow bright strip formed by the first line light source 430 focusing on the composite material strip 300 is parallel to a sensor of the first line scan camera, such that the line scan camera can obtain better shooting quality. The specific types of the first line light source 430 and the second line light source 440 are not limited, and may be, for example, LED light sources, halogen lamps, or high-frequency fluorescent lamps.

As shown in FIG. 3, in some embodiments, the system 400 for defect detection of a cathode electrode plate of a composite material strip further includes a first support roller 450, a first encoder 470 connected to the first support roller 450, a second support roller 460, and a second encoder 480 connected to the second support roller 460. The first support roller 450 abuts against one side surface of the composite material strip 300, and the first encoder 470 is configured to send a pulse signal to the first line scan camera to trigger the first line scan camera to acquire images line by line. The second support roller 460 abuts against another side surface of the composite material strip 300, and the second encoder 480 is configured to send a pulse signal to the second line scan camera to trigger the second line scan camera to acquire images line by line.

The encoder can convert angular displacement into pulse signal. The first support roller 450 is used as an example. When the first support roller 450 rotates continuously, the encoder sends one pulse signal per unit angle the first support roller 450 rotates, so as to trigger the first line scan camera to scan one side surface of the composite material strip 300.

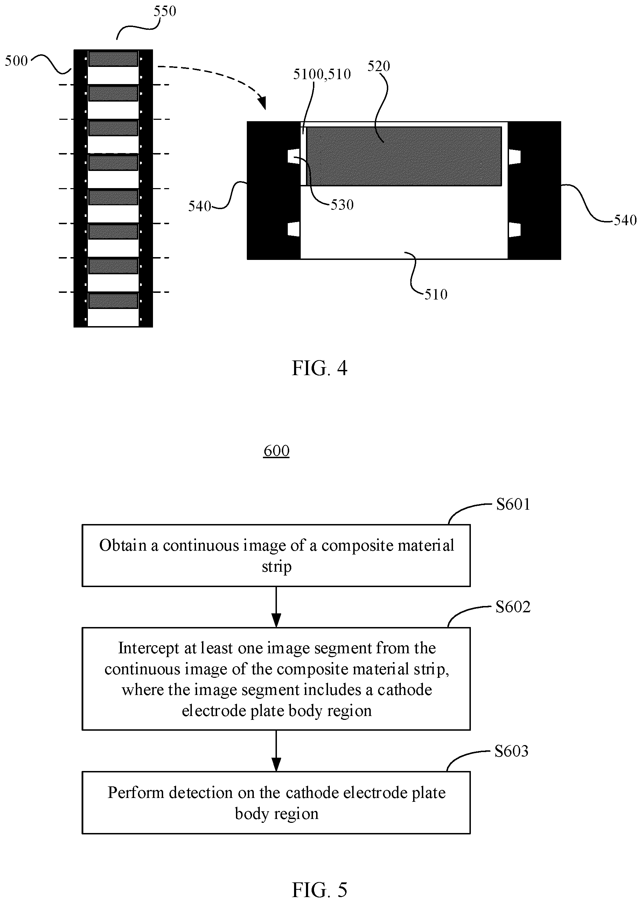

The first support roller 450 and the second support roller 460 can tighten the composite material strip 300, which is conducive to accurately acquiring images of the composite material strip 300, thereby improving the accuracy of defect detection. As shown in FIG. 4, the image segment 500 may further include a background region 540 corresponding to the first support roller 450 and the second support roller 460.

In some embodiments of this application, as shown in FIG. 3, an acquisition region of the first line scan camera is arranged at a tangent position S1 of the composite material strip 300 and the first support roller 450 (either of the two tangent positions is acceptable), and an acquisition region of the second line scan camera is arranged at a tangent position S2 of the composite material strip 300 and the second support roller 460 (either of the two tangent positions is acceptable). The first support roller 450 is used as an example. The acquisition region of the first line scan camera is arranged at the tangent position of the composite material strip 300 and the first support roller 450, which facilitates the installation and alignment of the first line scan camera (the first image acquisition unit 410) and the first line light source 430, thereby facilitating the accurate installation of the first line scan camera and the first line light source 430, and further improving the accuracy of defect detection.

As shown in FIG. 4, in the embodiments of this application, image segments 500 can be sequentially and continuously intercepted from the continuous images 550 for each side surface of the composite material strip 300, and then defect detection and analysis are performed on the cathode electrode plate of the composite material strip 300 based on the image segments 500. As an interception unit, each image segment 500 may include a separator region 510, a cathode electrode plate body region 520 surrounded by the separator region 510, and a plurality of tab protruding regions 530 protruding from the separator region 510. In addition, the image segment 500 may further include images of objects other than the composite material strip 300, such as an image of a support roller, corresponding to the background region 540 in the image segment 500.

In some embodiments, the cathode electrode plate body region 520 is exposed on a surface of the composite material strip 300. Because the anode electrode plate is sandwiched between two separators, the anode electrode plate body region is invisible in the image segment 500, but the tab protruding region 530 protruding from the separator region 510 is visible.

It should be noted that the image segment 500 may further include a tab-separator overlapping region 5100 connected between the cathode electrode plate body region 520 and the tab protruding region 530. The entirety of the tab-separator overlapping region 5100 and tab protruding region 530 corresponds to the tab of the cathode electrode plate on the composite material strip, to be specific, the entirety of the cathode electrode plate body region 520, tab-separator overlapping region 5100, and tab protruding region 530 corresponds to one cathode electrode plate on the composite material strip 300. Generally, a tab of an electrode plate is not provided with an active material layer, a metallic current collector is exposed at a portion of the electrode plate corresponding to the tab protruding region 530, and a metallic current collector may be exposed or a light-colored insulating layer (for example, a white insulating layer) may be provided at a portion of the electrode plate corresponding to the tab-separator overlapping region 5100. Generally, a grayscale of the metallic current collector or light-colored insulating layer in the image segment 500 is not lower than that of the separator region 510. Therefore, in some embodiments of this application, to simplify the computation, the tab-separator overlapping region 5100 can be included in the separator region 510, such that the detection region of the cathode electrode plate does not include the tab-separator overlapping region 5100.

As shown in FIG. 5, a method 600 for defect detection of a cathode electrode plate of a composite material strip according to some embodiments of this application includes the following steps S601 to S603.

Step S601: Obtain a continuous image of the composite material strip.

Step S602: Intercept at least one image segment from the continuous image of the composite material strip, where the image segment includes a cathode electrode plate body region.

Step S603: Perform detection on the cathode electrode plate body region.

According to the method 600 of these embodiments of this application, with computer vision technology, detection can be performed for defects existing in the cathode electrode plate of the composite material strip in the lamination process, which helps relevant personnel to adjust a relevant component in the lamination machine in a timely manner, thereby effectively controlling the outflow of battery cell assemblies with defects in the electrode plate and reducing the waste of production materials.

As shown in FIG. 4, the image segment 500, as an interception unit of the continuous image 550 of the composite material strip, at least includes a separator region 510 and a cathode electrode plate body region 520. In addition, the image segment 500 may further include a background region 540, a tab-separator overlapping region 5100, and a plurality of tab protruding regions 530 protruding from the separator region 510. In some embodiments of this application, to simplify the computation, the tab-separator overlapping region 5100 can be included in the separator region 510, such that the detection region of the cathode electrode plate does not include the tab-separator overlapping region 5100.

In these embodiments of this application, the image segment 500 can be intercepted from the continuous image 550 shot by a line scan camera, or the image segment 500 can be obtained from an image shot by an area array camera, which is not specifically limited in this application.

In some embodiments, the foregoing step S601 includes: obtaining a continuous image shot by a line scan camera for each side surface of the composite material strip. In this way, the defect detection can be performed on the cathode electrode plates on two sides of the composite material strip.

In some embodiments of this application, the foregoing step S601 includes: intercepting an image segment from the continuous image according to an image segmentation algorithm. In these embodiments, based on an image segmentation algorithm, the image segment can be intercepted from the continuous image shot by the line scan camera, such that the image segment is obtained. The image segmentation algorithm is not limited to a specific type, for example, may be a threshold-based segmentation algorithm, a region-based segmentation algorithm, an edge-based segmentation algorithm, or a specific theory-based segmentation algorithm. Referring to FIG. 4, in some embodiments of this application, a threshold-based segmentation method is used to find an edge of the cathode electrode plate body region 520 in a width direction of the composite material strip based on a grayscale difference between the cathode electrode plate body region 520 and the separator region 510, and then segmentation is performed on the continuous image 550 in the width direction of the composite material strip based on edges of two adjacent cathode electrode plate body regions 520 in the width direction of the composite material strip (a segmenting line can avoid the cathode electrode plate body region 520 and be separated from the cathode electrode plate body region 520 by several rows of pixels), to obtain the image segment 500.

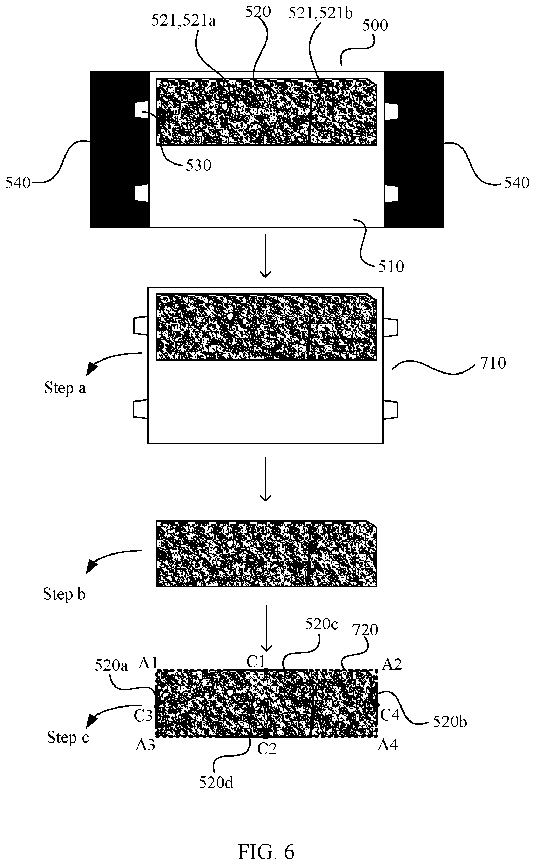

In some embodiments of this application, as shown in FIG. 6, the image segment 500 includes a separator region 510 (the tab-separator overlapping region 5100 is included in the separator region 510), a cathode electrode plate body region 520 surrounded by the separator region 510, a background region 540 adjacent to the separator region 510, and a plurality of tab protruding regions 530, where the separator region 510 is located between the left and right parts of the background region 540. The method for defect detection of a cathode electrode plate of a composite material strip may further include: extracting the cathode electrode plate body region 520 from the image segment 500. This step may, for example, include:
step a: removing the background region 540 from the image segment 500 based on a maximum grayscale threshold of the background region 540 to obtain an intermediate image 710; and
step b: removing the separator region 510 and the plurality of tab protruding regions 530 from the intermediate image 710 based on a maximum grayscale threshold of the cathode electrode plate body region 520 to obtain the cathode electrode plate body region 520.

As shown in FIG. 6, in the image segment 500, a grayscale G1 of the tab protruding region 530, a grayscale G2 of the separator region 510, a grayscale G3 of the cathode electrode plate body region, and a grayscale G4 of the background region 540 satisfy G4 < G3 < G2 ≤ G1. Therefore, in step a, the background region 540 can be removed from the image segment 500 based on the maximum grayscale threshold of the background region 540 (for example, set to 15).

In some embodiments, the background region 540 is removed from the image segment 500 using Blob algorithm in combination with a grayscale difference between the background region 540 and another region, to be specific, a characteristic region with a grayscale less than or equal to the maximum grayscale threshold of the background region 540 is removed. In computer vision, Blob refers to a connected component in an image, and Blob analysis is to extract and mark a connected component of a foreground/background separated binary image. The core concept of Blob algorithm is to find out a range of "grayscale mutation" in a region, so as to determine a size, shape, and area of the region. The maximum grayscale threshold of the background region 540 can be used as a grayscale threshold for binarizing the image segment 500.

In some embodiments of this application, in step a, the image segment 500 is first binarized based on the maximum grayscale threshold of the background region 540 (for example, set to 15), and a characteristic region with a grayscale less than or equal to the maximum grayscale threshold of the background region 540 is extracted; then segmentation is performed on the characteristic region is segmented based on a connection operator (connection operator) of machine vision software (for example, halcon software), so as to segment non-adjacent regions to form their own connected components; after that, a connected component (corresponding to the background region 540) with an area larger than a preset area threshold is selected based on a select_shape operator (selection operator) of the machine vision software; and finally, the background region 540 is subtracted from the image segment 500 based on a difference operator (subtraction operator) of the machine vision software to obtain the intermediate image 710.

In some embodiments of this application, in step b, binarization processing is performed on the intermediate image 710 first, and a characteristic region with a grayscale less than or equal to the maximum grayscale threshold of the cathode electrode plate body region 520 (for example, set to 25) is extracted; then, an opening operation (the opening operation is erosion operation followed by dilation operation, which plays the role of eliminating noise and smoothing the boundaries) and a closing operation (the closing operation is dilation operation followed by erosion operation, which plays the role of merging subtle connections) are performed on the characteristic region based on an opening_rectangle1 operator (opening operation operator) of the machine vision software; then, segmentation is performed on the characteristic region based on the connection operator (connection operator) of the machine vision software, so as to segment non-adjacent regions to form their own connected components; and finally, a connected component with a largest area and a largest rectangularity is selected based on a select_shape operator (selection operator) of the machine vision software, in other words, the cathode electrode plate body region 520 is selected.

As shown in FIG. 6, in some embodiments of this application, the performing detection on the cathode electrode plate body region 520 includes: determining, based on the cathode electrode plate body region 520, a detection region 720 corresponding to the cathode electrode plate body region 520.

This step may include, for example, step c: determining a minimum rectangular region circumscribed about edges of the cathode electrode plate body region 520, and taking the minimum rectangular region as the detection region 720 corresponding to the cathode electrode plate body region 520.

A damaged defect of the cathode electrode plate body may occur in an inner region, edge region, or corner region of the cathode electrode plate body. Generally, the cathode electrode plate body is designed to be rectangular. Therefore, it is necessary to fully detect the damage in each region of the cathode electrode plate body. In these embodiments, a minimum rectangular region circumscribed about the edges of the cathode electrode plate body region 520 is used as the detection region 720 corresponding to the cathode electrode plate body region 520, which can cover the detection of all regions of the cathode electrode plate body, provide more comprehensive detection, and effectively prevent the missed detection of defects, for example, a missed corner or damaged edge.

In some embodiments, the determining a minimum rectangular region circumscribed about edges of the cathode electrode plate body region 520 includes:
extracting a first straight edge 520a and a second straight edge 520b of the cathode electrode plate body region 520 that have the same extension direction as the composite material strip 300 and a third straight edge 520c and a fourth straight edge 520d that are orthogonal to the extension direction of the composite material strip 300; and
determining the minimum rectangular region (that is, the detection region 720) circumscribed about the edges of the cathode electrode plate body region 520 based on intersections A1, A2, A3, and A4 of the first straight edge 520a, the second straight edge 520b, the third straight edge 520c, and the fourth straight edge 520d.

As shown in FIG. 6, in some embodiments of this application, in step S603, coordinates of the center point O of the cathode electrode plate body region 520 is computed based on an area_center operator (region center operator) of the machine vision software.

Then, coordinates (X₁, Y₁) of the upper edge center point C1, coordinates (X₂, Y₂) of the lower edge center point C2, coordinates (X₃, Y₃) of the left edge center point C3, and coordinates (X₄, Y₄) of the right edge center point C4 are computed based on the coordinates (X₀, Y₀) of the center point O, where the upper edge center point C1 and the lower edge center point C2 have an equal distance to the center point O, and the left edge center point C3 and the right edge center point C4 have an equal distance to the center point O.

Then, the first straight edge 520a, the second straight edge 520b, the third straight edge 520c, and the fourth straight edge 520d are determined based on a two-dimensional edge-finding operator of the machine vision software. In some embodiments, the specific operation of this step can refer to the following ways: creating an edge-finding model handle based on a create_metrology_model operator (create metrology model operator) of the machine vision software; next, based on an add_metrology_object_generic operator (the operator that adds a metrology object to a metrology model) of the machine vision software, adding coordinate information and edge-finding parameters of edge-finding ROIs of four edges (in machine vision and image processing, the region to be processed is outlined from a processed image in a form of box, circle, ellipse, irregular polygon, or the like, and is called a region of interest ROI) to an edge-finding model in an order of left, right, top, and down; then, performing edge finding based on an apply_metrology_model operator (apply metrology model operator) of the machine vision software; after that, extracting edge finding results of the four edges based on a get_metrology_object_result operator (get metrology object result operator) of the machine vision software; afterwards, based on an angle_lx operator (an operator for computing the included angle between a straight line and a horizontal coordinate axis) of the machine vision software, computing included angles between the four edges and a reference edge of the image segment 500, and determining whether the included angles fall within an allowed range, for example, if the included angle between the first straight edge 520a and the upper edge of the image segment 500 and the included angle between the second straight edge 520b and the upper edge of the image segment 500 fall within a range of 85° to 95°, the edge finding is considered correct, and if the included angle between the third straight edge 520c and the upper edge of the image segment 500 and the included angle between the fourth straight edge 520d and the upper edge of the image segment 500 fall within a range of -5° to +5°, the edge finding is considered correct, where the foregoing included angle ranges can be determined according to the requirements of production process specifications.

Finally, based on an intersectin_lines operator (intersection lines operator) of the machine vision software, computing the four intersections A1, A2, A3, and A4 of the first straight edge 520a, the second straight edge 520b, the third straight edge 520c, and the fourth straight edge 520d, and using a rectangular region defined by the four intersections A1, A2, A3, and A4 as the detection region 720.

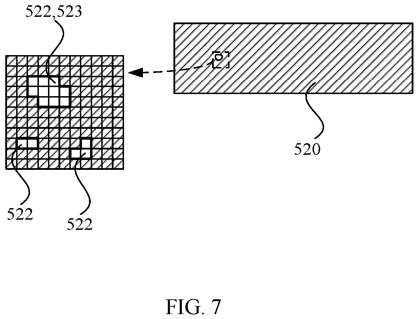

As shown in FIG. 5 and FIG. 7, in some embodiments of this application, the performing detection on the cathode electrode plate body region 520 includes: determining whether the detection region 720 includes a suspected defect region 523. This step may include, for example:
in response to determining that the detection region 720 includes an abnormal pixel set, obtaining at least one independently connected abnormal pixel subset 522 based on the abnormal pixel set, where a grayscale of each pixel in the abnormal pixel set is greater than the maximum grayscale threshold of the cathode electrode plate body region 520 or less than a minimum grayscale threshold of the cathode electrode plate body region 520; and
for each such abnormal pixel subset 522, in response to determining that an area of the abnormal pixel subset 522 is greater than an area threshold, determining that the detection region 720 includes the suspected defect region 523. The foregoing maximum grayscale threshold, minimum grayscale threshold, and area threshold can be determined according to experience or requirements of battery production process specifications.

As shown in FIG. 6, after the cathode electrode plate of the composite material strip is damaged, the lower separator is exposed, which causes the grayscale of the image in the damaged region 521a to increase. However, after the cathode electrode plate of the composite material strip is wrinkled, the grayscale of the image in a wrinkled region 521b is reduced. Therefore, the suspected defect region 523 can be determined using a grayscale difference between the defect region 521 and a normal region and the area threshold specified according to the requirements of production process specifications.

In some embodiments, the grayscale of the detection region 720 is first stretched based on a scale_image operator (an operator that performs proportional operation on pixels in an image) of the machine vision software to increase a grayscale difference contrast; next, a characteristic region with a grayscale in a set range (for example, the set range is set to 30-200) is extracted from the processed image based on a threshold operator (threshold processing operator) using the Blob algorithm; then, opening operation and closing operation are performed on the extracted characteristic region based on a closing_rectangle1 operator (morphological closing operator) of the machine vision software; after that, as shown in FIG. 7, segmentation is performed on the characteristic region based on a connection operator (connection operator) of the machine vision software, and non-adjacent regions are segmented to form their own connected components; and finally, based on an area_center operator (region center operator) of the machine vision software, the connected component with an area larger than the area threshold (for example, set to 2 square millimeters) is selected, which is the suspected defect region 523.

In some embodiments of this application, the performing detection on the cathode electrode plate body region includes: determining a suspected defect type corresponding to the suspected defect region 523 based on geometrical characteristic information and/or grayscale of the suspected defect region 523, where the suspected defect type includes suspected damage or suspected wrinkle.

The geometrical characteristic information of the suspected defect region 523 includes but is not limited to shape, size, and area. As shown in FIG. 6, the wrinkled region 521b typically has a linear image and has an area greater than the area threshold (which can be determined by experience, for example, set to 2 square millimeters). Therefore, suspected wrinkle and suspected damaged defects can be preliminarily distinguished based on this geometrical characteristic. In addition, the grayscale of the image in the damaged region 521a is significantly higher than that in the normal region, and the grayscale of the image in the wrinkled region 521b is significantly lower than that in the normal region. Therefore, a suspected defect type of the suspected defect region 523 can also be determined based on the grayscale of the suspected defect region 523. This embodiment can preliminarily distinguish the suspected wrinkle and the suspected damage defect of the electrode plate.

In some embodiments of this application, the performing detection on the cathode electrode plate body region includes:
determining a confidence coefficient of the suspected defect region based on image information of the suspected defect region and image information of at least one electrode plate defect sample in an electrode plate defect sample library; and
in response to determining that the confidence coefficient is greater than a confidence threshold, determining that the suspected defect region is a defect region.

For example, in some embodiments, first, a plurality of electrode plate defect samples in the electrode plate defect sample library are traversed, and similarity comparison is performed between image information of the suspected defect region and each electrode plate defect sample to obtain a similarity list; and then, screening is performed on the similarity list to retain a suspected defect region with a confidence coefficient greater than the confidence threshold as the determined defect region. With this step, a suspected defect region that does not meet the defect characteristics of the electrode plate can be filtered out, thereby improving the accuracy of detection.

The electrode plate defect sample library can be divided into several sample sub-libraries based on types of defects, for example, a damaged sample sub-library and a wrinkled sample sub-library. In some embodiments, the image information of the suspected defect region 523 is put into each of the sample sub-libraries in turn for similarity comparison with image information of samples therein. In some other embodiments, to increase the speed of software processing, after the suspected defect type corresponding to the suspected defect region 523 is preliminarily determined, image information of the suspected defect region 523 can be put into the corresponding sample sub-library for similarity comparison. For example, the image information of the suspected damaged region can be put into the damaged sample sub-library for similarity comparison with the image information of each damaged sample, so as to determine whether the suspected damaged region is a damaged region.

In some embodiments of this application, the method for defect detection of a cathode electrode plate of a composite material strip further includes: outputting a detection result, where the detection result may include at least one of the following: positioning information of the defect region in the image segment, geometrical characteristic information of the defect region, positioning information of the image segment corresponding to the composite material strip, alarm information indicating that the cathode electrode plate is defective, and a defect type, where the defect type includes damage or wrinkle.

The positioning information of the defect region in the image segment may be, for example, a frame line or an arrow indicating a position of the defect region. The geometrical characteristic information of the defect region includes but is not limited to length, width, and area of the defect region. The positioning information of the image segment corresponding to the composite material strip may be, for example, a shooting code corresponding to the image segment. The alarm information may be sound, light, or an alarm signal combining sound and light. The defect type is, for example, damaged separator or wrinkled separator. This application does not specifically limit the content of the detection result.

It should be noted that in some embodiments of this application, to increase the speed of software processing, the defect type may not be analyzed, determined, or output.

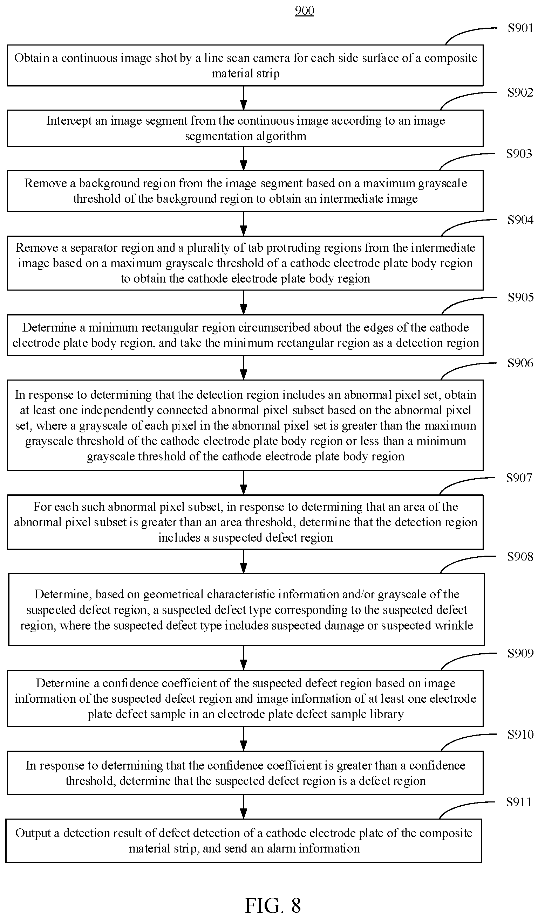

As shown in FIG. 8, a method 900 for defect detection of a cathode electrode plate of a composite material strip according to some embodiments of this application includes the following steps S901 to S911.

Step S901: Obtain a continuous image shot by a line scan camera for each side surface of the composite material strip.

Step S902: Intercept an image segment from the continuous image according to an image segmentation algorithm.

Step S903: Remove a background region from the image segment based on a maximum grayscale threshold of the background region to obtain an intermediate image.

Step S904: Remove a separator region and a plurality of tab protruding regions from the intermediate image based on a maximum grayscale threshold of a cathode electrode plate body region to obtain the cathode electrode plate body region.

Step S905: Determine a minimum rectangular region circumscribed about edges of the cathode electrode plate body region, and take the minimum rectangular region as a detection region. For example, a first straight edge and a second straight edge of the cathode electrode plate body region that have the same extension direction as the composite material strip and a third straight edge and a fourth straight edge that are orthogonal to the extension direction of the composite material strip are extracted; and the minimum rectangular region circumscribed about the edges of the cathode electrode plate body region is determined based on intersections of the first straight edge, the second straight edge, the third straight edge, and the fourth straight edge.

Step S906: In response to determining that the detection region includes an abnormal pixel set, obtain at least one independently connected abnormal pixel subset based on the abnormal pixel set, where a grayscale of each pixel in the abnormal pixel set is greater than the maximum grayscale threshold of the cathode electrode plate body region or less than a minimum grayscale threshold of the cathode electrode plate body region.

Step S907: For each such abnormal pixel subset, in response to determining that an area of the abnormal pixel subset is greater than an area threshold, determine that the detection region includes a suspected defect region.

Step S908: Determine, based on geometrical characteristic information and/or grayscale of the suspected defect region, a suspected defect type corresponding to the suspected defect region, where the suspected defect type includes suspected damage or suspected wrinkle.

Step S909: Determine a confidence coefficient of the suspected defect region based on image information of the suspected defect region and image information of at least one electrode plate defect sample in an electrode plate defect sample library.

Step S910: In response to determining that the confidence coefficient is greater than a confidence threshold, determine that the suspected defect region is the defect region.

Step S911: Output a detection result of defect detection of the cathode electrode plate of the composite material strip, and send alarm information.

According to the method of the foregoing embodiments of this application, detection can be performed for defects existing in the cathode electrode plate of the composite material strip in the lamination process, which helps relevant personnel to adjust a relevant component in the lamination machine in a timely manner, thereby effectively controlling the outflow of battery cell assemblies with defects in the electrode plate and reducing the waste of production materials.

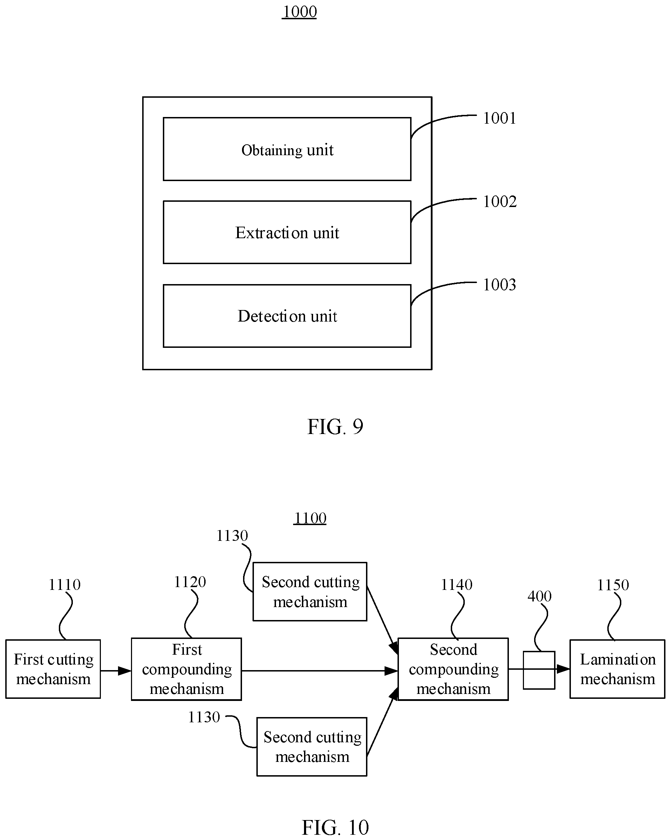

As shown in FIG. 9, an embodiment of this application further provides an apparatus 1000 for defect detection of a cathode electrode plate of a composite material strip, including:
an obtaining unit 1001, configured to obtain a continuous image of the composite material strip;
an extraction unit 1002, configured to intercept at least one image segment from the continuous image of the composite material strip, where the image segment includes a cathode electrode plate body region; and
a detection unit 1003, configured to perform detection on the cathode electrode plate body region.

An embodiment of this application further provides an electronic device, including at least one processor and a memory communicatively connected to the at least one processor, where the memory stores instructions executable by the at least one processor, and when the instructions are executed by the at least one processor, the at least one processor is caused to execute the foregoing method for defect detection of a cathode electrode plate of a composite material strip. The electronic device can be applied to the foregoing system 400 for defect detection of a cathode electrode plate of a composite material strip.

According to the foregoing virtual apparatus and electronic device of the embodiments of this application, detection can be performed for defects existing in a continuous cathode electrode plate of the composite material strip in the lamination process, which helps relevant personnel to adjust a relevant component in the lamination machine in a timely manner, thereby effectively controlling the outflow of battery cell assemblies with defects in the electrode plate and reducing the waste of production materials.

As shown in FIG. 10, an embodiment of this application further provides a lamination machine 1100, including the foregoing system 400 for defect detection of a cathode electrode plate of a composite material strip. In some embodiments, the lamination machine 1100 includes a first cutting mechanism 1110, a first compounding mechanism 1120, two second cutting mechanisms 1130, a second compounding mechanism 1140, and a lamination mechanism 1150 arranged in sequence, where the system 400 for defect detection of a cathode electrode plate of a composite material strip is arranged between the second compounding mechanism 1140 and the lamination mechanism 1150.

The first cutting mechanism 1110 is configured to cut a first electrode plate material segment from a first electrode plate material strip. The first compounding mechanism 1120 is configured to compound a first separator material strip and a second separator material strip with two side surfaces of the first electrode plate material segment to form a primary composite material strip. The two second cutting mechanisms 1130 are configured to cut a second electrode plate and a third electrode plate respectively from a second electrode plate material strip and a third electrode plate material strip in a one-to-one correspondence, where the second electrode plate material strip has the same polarity as the third electrode plate material strip and opposite polarity as the first electrode plate material strip. The second compounding mechanism 1140 is configured to alternately compound the second electrode plate and the third electrode plate with two side surfaces of the primary composite material strip to form a secondary composite material strip (for example, the foregoing composite material strip 300). The lamination mechanism 1150 is configured to laminate and cut the composite material strip to form a laminated assembly.

In lamination process of the lamination machine, detection can be performed for defects existing in continuous cathode electrode plates of the composite material strip, which helps relevant personnel to adjust a relevant component in the lamination machine in a timely manner, thereby effectively controlling the outflow of battery cell assemblies with defects in the electrode plate and reducing the waste of production materials.

An embodiment of this application further provides a computer-readable storage medium storing computer instructions, where the computer instructions are used to cause a computer to execute the method for defect detection of a cathode electrode plate of a composite material strip according to any one of the foregoing embodiments.

An embodiment of this application further provides a computer program product, including a computer program, where when the computer program is executed by a processor, the method for defect detection of a cathode electrode plate of a composite material strip according to any one of the foregoing embodiments is implemented.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A method for defect detection of a cathode electrode plate of a composite material strip, comprising:
obtaining a continuous image of the composite material strip;
extracting at least one image segment from the continuous image of the composite material strip, wherein the image segment comprises a cathode electrode plate body region; and
performing detection on the cathode electrode plate body region.

2. The method according to claim 1, wherein the image segment further comprises a separator region surrounding the cathode electrode plate body region, a plurality of tab protruding regions, and a background region adjacent to the separator region, and the method further comprises:
extracting the cathode electrode plate body region from the image segment.

3. The method according to claim 2, wherein the extracting the cathode electrode plate body region from the image segment comprises:
removing the background region from the image segment based on a maximum grayscale threshold of the background region to obtain an intermediate image; and
removing the separator region and the plurality of tab protruding regions from the intermediate image based on a maximum grayscale threshold of the cathode electrode plate body region to obtain the cathode electrode plate body region.

4. The method according to any one of claims 1 to 3, wherein the performing detection on the cathode electrode plate body region comprises:
determining, based on the cathode electrode plate body region, a detection region corresponding to the cathode electrode plate body region.

5. The method according to claim 4, wherein the determining a detection region corresponding to the cathode electrode plate body region comprises:
determining a minimum rectangular region circumscribed about edges of the cathode electrode plate body region, and taking the minimum rectangular region as the detection region corresponding to the cathode electrode plate body region.

6. The method according to claim 5, wherein the determining a minimum rectangular region circumscribed about edges of the cathode electrode plate body region comprises:
extracting a first straight edge and a second straight edge of the cathode electrode plate body region that have the same extension direction as the composite material strip and a third straight edge and a fourth straight edge that are orthogonal to the extension direction of the composite material strip; and
determining the minimum rectangular region circumscribed about the edges of the cathode electrode plate body region based on intersections of the first straight edge, the second straight edge, the third straight edge, and the fourth straight edge.

7. The method according to any one of claims 4 to 6, wherein the performing detection on the cathode electrode plate body region comprises: determining whether the detection region comprises a suspected defect region.

8. The method according to claim 7, wherein the determining whether the detection region comprises a suspected defect region comprises:
in response to determining that the detection region comprises an abnormal pixel set, obtaining at least one independently connected abnormal pixel subset based on the abnormal pixel set, wherein a grayscale of each pixel in the abnormal pixel set is greater than a maximum grayscale threshold of the cathode electrode plate body region or less than a minimum grayscale threshold of the cathode electrode plate body region; and
for each abnormal pixel subset, in response to determining that an area of the abnormal pixel subset is greater than an area threshold, determining that the detection region comprises the suspected defect region.

9. The method according to claim 8, wherein the performing detection on the cathode electrode plate body region comprises:
determining a suspected defect type corresponding to the suspected defect region based on geometrical characteristic information and/or grayscale of the suspected defect region, wherein the suspected defect type comprises suspected damage or suspected wrinkle.

10. The method according to claim 8 or 9, wherein the performing detection on the cathode electrode plate body region comprises:
determining a confidence coefficient of the suspected defect region based on image information of the suspected defect region and image information of at least one electrode plate defect sample in an electrode plate defect sample library; and
in response to determining that the confidence coefficient is greater than a confidence threshold, determining that the suspected defect region is a defect region.

11. The method according to any one of claims 1 to 10, wherein the obtaining a continuous image of the composite material strip comprises:
obtaining a continuous image shot by a line scan camera for each side surface of the composite material strip.

12. The method according to any one of claims 1 to 11, further comprising outputting a detection result, wherein
the detection result comprises at least one of the following: positioning information of the defect region in the image segment, geometrical characteristic information of the defect region, positioning information of the image segment corresponding to the composite material strip, alarm information indicating that the cathode electrode plate is defective, and a defect type, wherein the defect type comprises damage or wrinkle.

13. An apparatus for defect detection of a cathode electrode plate of a composite material strip, comprising:
an obtaining unit, configured to obtain a continuous image of the composite material strip;
an extraction unit, configured to extract at least one image segment from the continuous image of the composite material strip, wherein the image segment comprises a cathode electrode plate body region; and
a detection unit, configured to perform detection on the cathode electrode plate body region.

14. An electronic device, comprising at least one processor and a memory communicatively connected to the at least one processor, wherein
the memory having stored thereon instructions executable by the at least one processor, and when the instructions are executed by the at least one processor, the at least one processor is caused to execute the method according to any one of claims 1 to 12.

15. A system for defect detection of a cathode electrode plate of a composite material strip, comprising:
a first image acquisition unit, configured to acquire a continuous image of a side surface of the composite material strip;
a second image acquisition unit, configured to acquire a continuous image of another side surface of the composite material strip; and
the electronic device according to claim 14, connected to the first image acquisition unit and the second image acquisition unit separately.

16. The system according to claim 15, wherein
the first image acquisition unit is a first line scan camera, and the second image acquisition unit is a second line scan camera; and
the system further comprises a first line light source for illuminating an acquisition region of the first line scan camera and a second line light source for illuminating an acquisition region of the second line scan camera.

17. The system according to claim 16, further comprising:
a first support roller and a first encoder connected to the first support roller, wherein the first support roller abuts against a side surface of the composite material strip, and the first encoder is configured to send a pulse signal to the first line scan camera to trigger the first line scan camera to acquire images line by line; and
a second support roller and a second encoder connected to the second support roller, wherein the second support roller abuts against another side surface of the composite material strip, and the second encoder is configured to send a pulse signal to the second line scan camera to trigger the second line scan camera to acquire images line by line.

18. The system according to claim 17, wherein
the acquisition region of the first line scan camera is arranged at a tangent position of the composite material strip and the first support roller; and
the acquisition region of the second line scan camera is arranged at a tangent position of the composite material strip and the second support roller.

19. A lamination machine, comprising the system according to any one of claims 15 to 18.

20. A computer-readable storage medium having stored thereon computer instructions, wherein the computer instructions are used to cause a computer to execute the method according to any one of claims 1 to 12.

21. A computer program product, comprising a computer program, wherein when the computer program is executed by a processor, the method according to any one of claims 1 to 12 is implemented.
